# EUROPÄISCHE PATENTSCHRIFT

(11) **EP 0 584 772 B1**
(45) Veröffentlichungstag und Bekanntmachung des Hinweises auf die Patenterteilung: **21.01.1998**
(21) Anmeldenummer: 93113460.5
(22) Anmeldetag: 24.08.1993
(51) Int. Cl.: B65H 1/16, H02P 6/00

(54) **Verfahren zur Steuerung eines Antriebs für den Stapeltisch einer Stapelhubeinrichtung**
Method for controlling of a drive for the table of a pile lifting device
Méthode pour commander une enttraînement d'une table d'empilage d'un agencement élévateur

(30) Priorität: 28.08.1992 DE 4228664
(43) Veröffentlichungstag der Anmeldung: 02.03.1994
(73) Patentinhaber: Heidelberger Druckmaschinen Aktiengesellschaft, D-69115 Heidelberg (DE)
(72) Erfinder: Meyer, Helmut, D-69469 Weinheim (DE); Schunn, Johann, D-69181 Leimen (DE)
(74) Vertreter: Fey, Hans-Jürgen

(56) Entgegenhaltungen:
- DE-A- 2 156 389
- DE-A- 4 010 985
- DE-C- 4 135 752
- PATENT ABSTRACTS OF JAPAN vol. 8, no. 191 (M-322) 4. September 1984 & JP-A-59 082 241 (SANNOMIYA AKIO) 12. Mai 1984
- PATENT ABSTRACTS OF JAPAN vol. 15, no. 333 (M-1150) 23. August 1991 & JP-A-03 128 826 (MITA IND CO LTD) 31. Mai 1991
- PATENT ABSTRACTS OF JAPAN vol. 15, no. 142 (M-1101) 10. April 1991 & JP-A-03 023 121 (RICOH CO LTD.) 31. Januar 1991
- PATENT ABSTRACTS OF JAPAN vol. 13, no. 392 (M-865) 30. August 1989 & JP-A-01 139 430 (TOKYO ELECTRIC CO LTD) 31. Mai 1989

## Beschreibung

Die Erfindung betrifft ein Verfahren zur Steuerung des Antriebes für einen Stapeltisch einer Stapelhubeinrichtung an einer Bogendruckmaschine, wobei als Antriebsmotor ein bürstenloser Gleichstrommotor mit n Phasenwicklungen vorgesehen ist, dem eine Steuerungselektronik zugeordnet ist.

Aus der DE 40 20 429 C1 ist bereits ein Verfahren zur Steuerung eines Antriebsmotors für den Stapeltisch einer Stapelhubeinrichtung an einer Bogendruckmaschine bekannt geworden. Gemäß einer Ausführungsform wird als Antriebsmotor ein bürstenloser Gleichstrommotor verwendet. Das in der obengenannten Patentschrift offenbarte Verfahren nutzt den Umstand aus, daß bei großer Stapelhöhe zwar große Drehmomente für den Antrieb erforderlich sind, jedoch nur kurze Entfernungen zu überwinden sind, während bei geringer Stapelhöhe ein geringes Drehmoment bei höheren Geschwindigkeiten erforderlich ist. Daher wird der Motor in zwei Betriebsarten betrieben, wobei er in einer ersten Betriebsart ein hohes Nenndrehmoment und eine niedrige Nenndrehzahl und in einer zweiten Betriebsart ein niedriges Nenndrehmoment und eine hohe Nenndrehzahl aufweist. Beim Einschalten des Motors wird zum Heben oder Senken des Stapeltisches die erste Betriebsart gewählt. Nach einer vorgegebenen Zeitspanne nach dem Einschalten wird auf die zweite Betriebsart umgeschaltet, wenn die Drehzahl beim Heben des Stapeltisches einen vorgegebenen Wert überschritten und beim Senken des Stapeltisches einen vorgegebenen Wert nicht überschritten hat. Durch dieses Verfahren wird erreicht, daß der Stapeltisch trotz hoher Arbeitsgeschwindigkeit sanft abgebremst und beschleunigt wird.

Hohe Arbeitsgeschwindigkeiten sind aus Rationalisierungsgründen für das Be- und Entladen des Stapeltisches erforderlich. Wahrend des Drukprozesses jedoch muß der Stapeltisch am Anleger über die Hubeinrichtung so nachgeführt werden, daß der oberste Bogen problemlos von dem Saugkopfübernommen und in die Maschine hineintransportiert werden kann. Ähnliche Überlegungen gelten auch für die korrekte Bogenablage am Ausleger der Druckmaschine. Üblicherweise erfolgt dieser Nachführbetrieb des Bogenstapels während des Druckprozesses derart, daß die Lage der Stapeloberkante als Steuergröße verwendet wird.

Aus der JP 59-82241 A ist ein Antrieb für einen Stapeltisch einer Stapelhubeinrichtung an einer Bogendruckmaschine bekannt, wobei als Antriebsmotor ein bürstenloser Gleichstrommotor mit n Phasenwicklungen vorgesehen ist, dem eine Steuerungselektronik zugeordnet ist.

Der Erfindung liegt die Aufgabe zugrunde, einen Antrieb und ein Verfahren zur Steuerung dieses Antriebes vorzuschlagen, das die Nachführung des Stapels während des Druckprozesses optimiert.

Die Aufgabe wird hinsichtlich des Antriebes dadurch gelöst, daß der bürstenlose Gleichstrommotor als Schrittmotor mit Fremdkommutierung ausgebildet ist; hinsichtlich des vorgesehenen Verfahrens ist erfindungsgemäß vorgesehen, daß die Steuerelektronik die Phasenwicklungen derart bestromt, daß der bürstenlose Gleichstrommotor sukzessive in die folgerichtigen statischen Rotorlagen gesteuert wird.

Gemäß einer Weiterbildung des erfindungsgemäßen Verfahrens wird vorgeschlagen, daß der bürstenlose Gleichstrommotor zum Be- und Entladen als Gleichstrommotor mit Selbstkommutierung und während des Druckprozesses als Schrittmotor mit Fremdkommutierung betrieben wird. Mit dieser Ausbildung erfüllt das erfindungsgemäße Verfahren sowohl die Forderung, daß zum Be- und Entladen ein schnelles Verfahren des Stapeltisches erreicht wird als auch die Forderung, daß während des Druckprozesses die

Stapeloberkante stets in die korrekte Lage gebracht wird. Während die erste Forderung unter wirtschaftlichen Gesichtspunkten von Bedeutung ist, stellt die zweite Forderung die korrekte Abnahme des jeweils obersten Bogens vom Stapel bzw. die korrekte Ablage eines Bogens auf die Stapel - und damit den korrekten Ablauf des Druckprozesses - sicher.

Eine Weiterbildung des erfindungsgemäßen Verfahrens sieht vor, daß die korrekte Lage der Stapeloberkante signalisiert wird und daß beginnend mit diesem Signal eine vorgegebene Anzahl von diskreten Rotorlagen innerhalb eines vorgegebenen Zeitraumes angesteuert wird.

In einer Weiterbildung wird vorgeschlagen, daß die Steuerelektronik die Anzahl dieser diskreten Rotorlagen auf die Anzahl korrigiert, die zwischen zwei aufeinander folgenden Startsignalen maximal möglich ist.

In einer alternativen Ausbildung des erfindungsgemäßen Verfahrens wird vorgeschlagen, daß die korrekte Lage der Stapeloberkante signalisiert wird, daß aus der Druckgeschwindigkeit und der Bogendicke die Hubgeschwindigkeit des Stapeltisches berechnet wird und daß mit dem Auftreten des Startsignales die diskreten Rotorlagen zeitlich so angesteuert werden, daß der schrittweise Stapelhub kontinuierlich erfolgt. Während bei der zuvor beschriebenen Variante der schrittweise Stapelhub nur dann kontinuierlich erfolgt, wenn die vorgegebene oder korrigierte Anzahl der diskreten Rotorlagen über den zur Verfügung stehenden Zeitraum zwischen zwei Startsignalen verteilt ist, wird bei der zweiten Variante die zeitliche Aufeinanderfolge der diskreten Rotorlagen so gesteuert, daß der Stapelhub zwischen zwei aufeinander folgenden Startsignalen kontinuierlich mit einer auf die Druckgrößen abgestimmten Schrittweite erfolgt.

Eine Weiterbildung des erfindungsgemäßen Verfahrens sieht vor, daß im Schrittmotorbetrieb - wenn also ein Gleichstrommotor mit beispielsweise drei Phasenwicklungen mit Fremdkommutierung betrieben wird - jeweils zwei der drei Phasenwicklungen bestromt werden. Diese Art der Bestromung entspricht der üblichen Bestromung bei einem bürstenlosen Gleichstrommotor. Der Strom in den Phasenwicklungen zeigt einen trapezförmigen Verlauf.

In einer Weiterbildung des erfindungsgemäßen Verfahrens wird vorgeschlagen, daß im Schrittmotorbetrieb bei einem bürstenlosen Gleichstrommotor mit drei Phasenwicklungen jeweils alle drei Phasenwicklungen gleichzeitig bestromt werden. Insbesondere fließt in einer der Phasenwicklungen der Gesamtstrom, während in den verbleibenden Phasenwicklungen jeweils die Hälfte des Gesamtstromes fließt. Diese Ausgestaltung des erfindungsgemäßen Verfahrens ist besonders vorteilhaft, da der Rotor optimal schnell die angesteuerte statische Rotorlage erreicht. Die Einschwingphase wird durch diese Art der Bestromung erheblich verkürzt, wodurch eine diskrete Schrittweite auch bei hohen Schrittfolgen erreicht wird. Die statische Rotorlage wird näherungsweise exakt zwischen zwei Kommutierungszeitpunkten erreicht.

Ein üblicher Rotorlagegeber unterscheidet pro 360° el. sechs unterschiedliche Rotorstellungen. Pro Motorumdrehung sind damit 18 diskrete Rotorlagen möglich. Um die Schrittweite des Motors zu halbieren, was insbesondere bei dünnen Papieren erforderlich sein kann, wird in einer Weiterbildung des erfindungsgemäßen Verfahrens ein gemischter Betrieb aus einer Zwei- und Dreispulenbestromung vorgeschlagen.

Die Erfindung wird anhand der nachfolgenden Figuren näher erläutert.

Es zeigt:
- Fig. 1: eine schematische Darstellung der Stapelhubeinrichtung,
- Fig. 2: ein Blockschaltbild des erfindungsgemäßen Antriebes und
- Fig. 3: ein Flußdiagramm zur Ansteuerung des erfindungsgemäßen Antriebes.

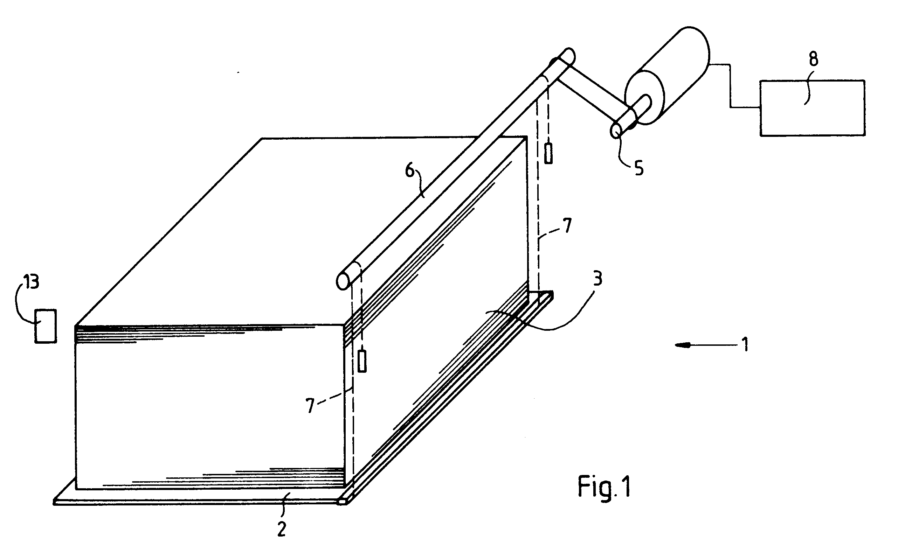

Fig. 1 zeigt eine schematische Darstellung einer Stapelhubeinrichtung 1 am Anleger oder Ausleger einer nicht dargestellten Bogendruckmaschine. Die Stapelhubeinrichtung 1 besteht aus einem Stapeltisch 2, der den Bogenstapel 3 trägt. Der Stapeltisch 2 ist über Ketten 7 und eine Welle 6 mit der Antriebswelle 5 eines bürstenlosen Gleichstrommotors 4 verbunden. Der bürstenlose Gleichstrommotor 4 wird von einer Steuerelektronik 8 gesteuert.

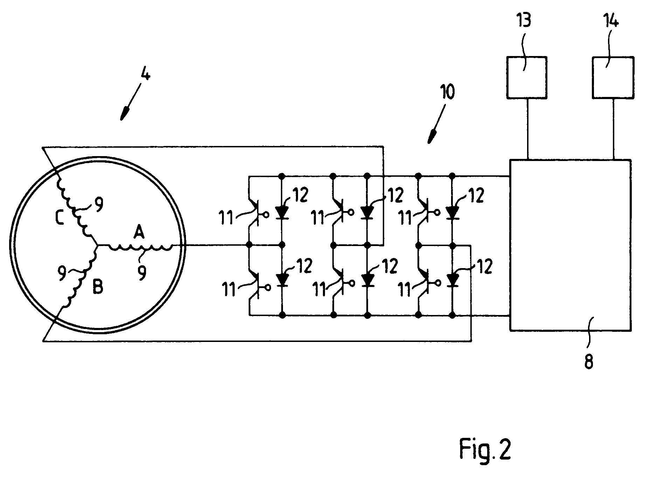

In Fig. 2 ist ein Blockschaltbild des erfindungsgemäßen Antriebes dargestellt. Bei dem Motor handelt es sich um einen bürstenlosen Gleichstrommotor 4 mit drei Phasenwicklungen 9. Das Leistungsteil 10 des bürstenlosen Gleichstrommotors 4 wird über eine Steuerelektronik 8 angesteuert. Wird der bürstenlose Gleichstrommotor 4 in seiner bekannten Funktion als selbstkommutierender Gleichstrommotor 4 verwendet, - vorteilhafterweise arbeitet der Motor während des Be- und Entladens des Bogenstapels 3 in dieser Betriebsart - so erfolgt die Ansteuerung der einzelnen Phasenwicklungen 9 entsprechend den Signalen eines nicht gesondert dargestellten Rotorlagegebers. In dieser Betriebsart erfolgt eine Regelung des Gleichstrommotors 4 entweder über die Drehzahl, oder sie erfolgt an der Spannungsgrenze.

Die Ansteuerung der einzelnen Phasenwicklungen erfolgt über ein Leistungsteil 10. Dieses Leistungsteil 10 besteht in bekannter Weise aus sechs Transistoren 11, denen Freilaufdioden 12 parallel geschaltet sind. Entsprechend den Signalen des Rotorlagegebers erfolgt die Beaufschlagung der Phasenwicklungen 9 jeweils über die Einschaltung von zwei Transistoren 11, während die jeweils dritte Phasenwicklung 9 stromlos ist.

Erfindungsgemäß wird diese bekannte Ausführungsform des bürstenlosen Gleichstrommotors 4 für eine zweite Betriebsart ausgenutzt:
der bürstenlose Gleichstrommotor 4 wird als Schrittmotor mit Fremdkommutierung betrieben. Hierzu ist in der Steuerelektronik 8 das Bestromungsschema für die folgerichtige Ansteuerung der Phasenwicklungen 9 abgespeichert. Erhält die Steuervorrichtung 8 nach dem Verfahren des Stapeltisches 2 ein Signal des Lageerkennungsdetektors 13, das die korrekte Lage der Stapeloberkante anzeigt, so schaltet die Steuerelektronik 8 die Transistoren 11 sukzessive und folgerichtig ein. Durch die schrittweise Bestromung der Phasenwicklungen 9 wird erreicht, daß der bürstenlose Gleichstrommotor 4 im Schrittmotorbetrieb arbeitet.

Für die Ausführung des Schrittmotorbetriebes stehen prinzipiell zwei Möglichkeiten zur Verfügung:
entweder wird die durch die Geometrie des Gleichstrommotors 4 vorgegebene Anzahl von statischen Rotorlagen innerhalb einer festen Zeit durchlaufen - was, wie bereits beschrieben, in bestimmten Fällen zu einem diskontinuierlichen Nachführbetrieb des Bogenstapels 3 führt - oder die Steuerelektronik 8 berechnet aus der Anzahl der statischen Rotorlagen und der Hubgeschwindigkeit des Stapeltisches 2 die Zeitspanne zwischen zwei aufeinander folgenden statischen Rotorlagen - in diesem Fall erfolgt der Schrittmotorbetrieb jederzeit kontinuierlich.

Werden jeweils nur zwei Phasenwicklungen 9 bestromt, so vergeht eine gewisse Zeit bis sich der Rotor des bürstenlosen Gleichstrommotors 4 in die statische Rotorlage eingependelt hat. Gemäß einer Weiterbildung des erfindungsgemäßen Verfahrens ist vorgesehen, daß jeweils drei Phasenwicklungen 9 bestromt werden, wobei in einer Phasenwicklung 9 der Gesamtstrom fließt, während in den verbleibenden Phasenwicklungen 9 jeweils die Hälfte des Gesamtstromes fließt. Durch diese Maßnahme wird der Einschwingvorgang des Rotors in die statische Rotorlage verkürzt, wodurch selbst bei hohen Fortschaltgeschwindigkeiten des Drehfeldes, d. h. bei hoher Schrittfolge, eine nahezu konstante Schrittweite erzielt wird.

In gewissen Anwendungsfällen, beispielsweise beim Bedrucken dünner Papiere, kann es vorteilhaft sein, mit einer geringeren Schrittweite zu arbeiten. Bei einem Gleichstrommotor 4 mit drei Phasenwicklungen 9 lassen sich pro 360° el. sechs diskrete Rotorlagen eindeutig bestimmen, d. h. pro Umdrehung des bürstenlosen Gleichstrommotors 4 sind 18 statische Rotorlagen und damit eine Schrittweite von 20° mech. vorgegeben. Eine Halbierung der Schrittweite wird dadurch möglich, daß die Steuerungselektronik 8 abwechselnd zwei Phasenwicklungen 9 bestromt - und damit den bürstenlosen Gleichstrommotor 4 wie üblich ansteuert - und dann alle drei Phasenwicklungen 9 in der zuvor beschriebenen Art und weise mit Strom beaufschlagt.

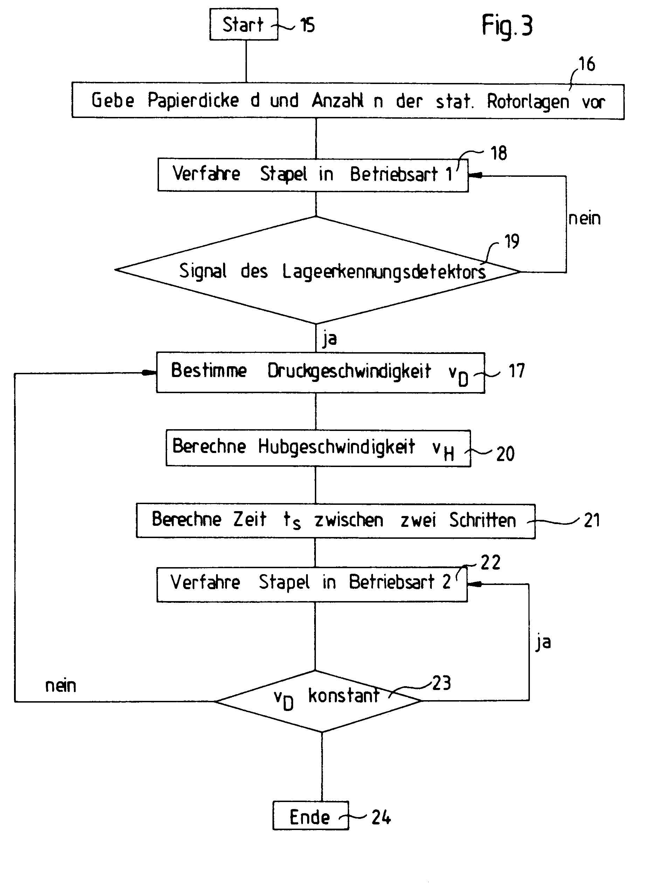

Fig. 3 zeigt eine Flußdiagramm zur Ansteuerung des erfindungsgemäßen Antriebes. Bei 15 startet das Programm, bei 16 wird der Steuerelektronik 8 Information über die Papierdicke und die Anzahl der statischen Rotorlagen geliefert. Bei einem bürstenlosen Gleichstrommotor 4 mit drei Phasenwicklungen 9 ergeben sich je nach den zuvor beschriebenen Ansteuerungsarten 18 oder 36 diskrete Rotorlagen. Bei 17 erhält die Steuerungselektronik 8 Information über die Druckgeschwindigkeit v_{D} von einer Drehzahlerkennung. Gemäß Punkt 18 wird der Stapeltisch in der Betriebsart I, also über die übliche Selbstkommutierung des bürstenlosen Gleichstrommotors 4 verfahren, bis das Signal des Lageerkennungsdetektors 13 diese Bewegung stoppt. Anschließend wird unter Punkt 20 die Hubgeschwindigkeit v_{H} des Stapeltisches 2 während des Druckprozesses errechnet und hieraus bei 21 die Zeitspanne t_{S} zwischen zwei aufeinander folgenden statischen Rotorlagen bestimmt. Bei 22 steuert die Steuerelektronik 8 den bürstenlosen Gleichstrommotor 4 in die Betriebsart II, d. h., der bürstenlose Gleichstrommotor 4 wird nunmehr fremdkommutiert. Bei Änderungen der Druckgeschwindigkeit v_{D} springt das Programm auf den Programmpunkt 20 zurück. Ist ein Bogenstapel 3 abgearbeitet, wird erst wieder auf die Betriebsart I und anschließend auf die Betriebsart II geschaltet. Das Programm endet im Programmpunkt 24 mit Beendigung des Druckauftrages.

## Patentansprüche

1. Verfahren zur Steuerung eines Antriebes für den Stapeltisch einer Stapelhubeinrichtung an einer Bogendruckmaschine, wobei als Antriebsmotor ein bürstenloser Gleichstrommotor mit drei Phasenwicklungen vorgesehen ist, dem eine Steuerungselektronik zugeordnet ist, die die Phasenwicklungen bestromt,
**dadurch gekennzeichnet,**
daß die statischen Rotorlagen derart angesteuert werden, daß von drei Phasenwicklungen (9) abwechselnd zwei und dann drei Phasenwicklungen (9) bestromt werden, wobei bei der Bestromung von drei Phasenwicklungen (9) jeweils in einer Phasenwicklung (9) der Gesamtstrom und in den beiden Verbleibenden jeweils die Hälfte des Gesamtstromes liest.

2. Verfahren nach Anspruch 1,
**dadurch gekennzeichnet,**
daß der bürstenlose Gleichstrommotor (4) zum Be- und Entladen als Gleichstrommotor mit Selbstkommutierung (Betriebsart I) und während des Druckprozesses als Schrittmotor mit Fremdkommutierung (Betriebsart II) betrieben wird.

3. Verfahren nach Anspruch 2,
**dadurch gekennzeichnet,**
daß die korrekte Lage der Stapeloberkante signalisiert wird und daß beginnend mit diesem Signal eine vorgegebene Anzahl von diskreten Rotorlagen innerhalb eines vorgegebenen Zeitraumes angesteuert wird.

4. Verfahren nach Anspruch 3,
**dadurch gekennzeichnet,**
daß die Steuerungselektronik (8) die Anzahl der diskreten Rotorlagen auf die Anzahl korrigiert, die zwischen zwei aufeinander folgenden Startsignalen maximal möglich ist.

## Claims

1. Method for controlling a drive for the stacking table of a stack-raising device on a sheet printing machine, a brushless DC motor with three phase windings being provided as drive motor, which motor, is assigned an electronic control system which supplies the phase windings with current, characterized in that the rotor is moved into the static positions in such a way that of three phase windings (9) alternately two, and then three, phase windings (9) are supplied with current, it being the case that when three phase windings (9) are supplied with current in each case the total current flows in one phase winding (9) and in each case half of the total current flows in the two remaining phase windings.

2. Method according to Claim 1, characterized in that the brushless DC motor (4) is operated for loading and unloading as DC motor with self-commutation (mode of operation I) and is operated during the printing process as a stepping motor with external commutation (mode of operation II).

3. Method according to Claim 2, characterized in that the correct position of the upper edge of the stack is signalled, and in that starting at this signal the rotor is moved into a predetermined number of discrete positions within a predetermined time.

4. Method according to Claim 3, characterized in that the electronic control system (8) corrects the number of discrete rotor positions to the maximum number which is possible between two successive starting signals.

## Revendications

1. Procédé pour commander l'entraînement de la table d'empilage d'un dispositif de montée/abaissement de pile sur une machine à imprimer des feuilles, avec prévision, comme moteur d'entraînement, d'un moteur à courant continu sans balais et possédant trois enroulements de phase, auquel est coordonnée une électronique de commande qui alimente les enroulements de phase,
**caractérisé en ce que**
les positions statiques de rotor du moteur sont commandées de manière que, des trois enroulements de phase (9), deux enroulements puis trois enroulements de phase (9) soient alimentés alternativement et que, pendant l'alimentation de trois enroulements de phase (9), le courant total circule dans un enroulement de phase (9) et la moitié du courant total circule chaque fois dans les deux enroulements restants.

2. Procédé selon la revendication 1, **caractérisé en ce que** le moteur à courant continu (4) sans balais est utilisé pour le chargement et le déchargement comme un moteur à courant continu à commutation automatique (mode de fonctionnement I) et, pendant le processus d'impression, comme un moteur pas à pas à commutation extérieure (mode de fonctionnement II).

3. Procédé selon la revendication 2, **caractérisé en ce que** le niveau convenable, du dessus de la pile est signalé et que, à partir de ce signal, un nombre préfixé de positions discrètes de rotor est commandé dans un temps préfixé.

4. Procédé selon la revendication 3, **caractérisé en ce que** l'électronique de commande (8) corrige le nombre de positions discrètes de rotor en le faisant passer au nombre maximal possible entre deux signaux de départ qui se suivent.
